# EUROPÄISCHE PATENTANMELDUNG

(11) **EP 1 050 361 A2**
(43) Veröffentlichungstag der Anmeldung: **08.11.2000**
(21) Anmeldenummer: 00103947.8
(22) Anmeldetag: 25.02.2000
(51) Int. Cl.: B23K 37/02, B23K 37/047, B62D 65/00, B25J 5/04

(54) **Transporteinrichtung für Rohbauschweissvorrichtungen**

(30) Priorität: 03.05.1999 DE 19920183
(71) Anmelder: Krupp Drauz Ingenieurbetrieb GmbH, 09337 Hohenstein-Ernstthal (DE)
(72) Erfinder: Bünning, Klaus, 09113 Chemnitz (DE); Rohland, Jörg, 09119 Chemnitz (DE); Schneider, Stefan, 08371 Glauchau (DE)
(74) Vertreter: Illing, Ralf, Dipl.-Jur. Ing.

(57) **Zusammenfassung**

Die Erfindung betrifft eine Transporteinrichtung für Rohbauschweißvorrichtungen für Kraftfahrzeugkarosserie-Schweißbaugruppen, insbesondere Bodenbaugruppen,mit Überkopf-Transportbahnen für den An- und Abtransport der Schweißbaugruppen.

Die erfindungsgemäße Transporteinrichtung soll die Anzahl der bewegten Baugruppen und deren Antriebe verringern und die Arbeitsgeschwindigkeit erhöhen.

Die erfindungsgemäße Lösung ist gekennzeichnet durch zwei zwischen den beiden Überkopf-Transportbahnen angeordnete Führungsportale, die eine Spannvorrichtung einschließen und einen verfahrbaren Ausleger tragen. Beidseitig am Ausleger sind senkrecht verfahrbare Hauptschlitten gelagert, die ihrerseits auf ihnen verfahrbare Greiferschlitten tragen. Die Zahnriemenantriebe für beide Hauptschlitten und ihren Greiferschlitten sind im Ausleger gelagert und ermöglichen eine Verdoppelung der Hubgeschwindigkeit. Weiterhin sind Masseausgleichvorrichtungen vorgesehen.

## Beschreibung

Die Erfindung betrifft eine Transporteinrichtung für Rohbauschweißvorrichtungen für Kraftfahrzeugkarosserie-Schweißbaugruppen, insbesondere Bodenbaugruppen,mit Überkopf-Transportbahnen für den An- und Abtransport der Schweißbaugruppen.

Es sind portalartige Schweißanlagen für Kraftfahrzeugkarosserie-Bodenbaugruppen bekannt, durch die eine Transportbahn hindurchführt, die die Bodenbaugruppen von Station zu Station bewegt. Auf eine derartige Anlage bezieht sich die Erfindung nicht (DE 36 13 956 A1 und DE 35 06 314 C2). Es sind weiterhin Schweißvorrichtungen für Kraftfahrzeugkarosserie-Bodenbaugruppen mit Überkopf-Transportbahnen für den An- und Abtransport der Bodenbaugruppen bekannt. Durch je eine separate Hubeinrichtung, die auf einem quer zwischen den Überkopf-Transportbahnen angeordneten Führungsträger verfahrbar sind, werden zu bearbeitende Bodenbaugruppen an- und die fertigbearbeiteten Bodenbaugruppen abtransportiert. Für jede Hubeinrichtung sind somit separate Antriebe für die Hubbewegungen und die Verfahrbewegungen erforderlich. Durch die große Anzahl Hubeinrichtungen und die für jeden erforderlichen Antrieb entsteht ein hoher Aufwand, der hohe Kosten verursacht. Da die Bodenbaugruppen mittels C-Haken an der Hubeinrichtung hängen, ist dieser beim Positionieren und Schweißen der anzufügenden Teile störend im Weg.

Für Beschickungs- und Entnahmevorrichtungen, insbesondere an Pressen, sind für die höhenverschiebbaren Werkzeugträger Zahnriemenantriebe bekannt. Deren Antriebsmotor ist an einem stationären Maschinenteil angeordnet. Der Zahnriemen ist über mehrere Umlenkrollen im verfahrbaren Schlitten und am höhenverschiebbaren Werkzeugträger geschlungen und seine beiden Enden sind am dem Antriebsmotor gegenüberliegenden Ende der Führungsbahn befestigt. Bei dieser Lösung hat die Länge des Verfahrweges nur einen sehr geringen Einfluß auf die Funktionssicherheit des Antriebes. Weiterhin ist der verfahrbare Werkzeugträger von der Belastung durch den Antriebsmotor freigehalten (DE 32 33 428 C1).

Es ist Aufgabe der Erfindung, eine gattungsgemäße Transporteinrichtung für Rohbauschweißvorrichtungen für Kraftfahrzeugkarosserie-Schweißbaugruppen dahingehend zu verbessern, daß die zum Stand der Technik aufgezeigten Unzulänglichkeiten reduziert sind. Insbesondere soll die Anzahl der bewegten Baugruppen und deren Antriebe verringert und die Arbeitsgeschwindigkeit erhöht werden.

Die Aufgabe wird erfindungsgemäß durch die Merkmale der Patentansprüche 1 und 4 gelöst. Die Merkmale der Unteransprüche sind vorteilhafte Ausgestaltungen der Patentansprüche 1 und 4.

Durch die beidseitig am Ausleger gelagerten Hauptschlitten mit ihren Greiferschlitten sind diese zu einer verfahrbaren Einheit zusammengefaßt, die für ihre waagerechte Bewegung auf den Führungsträgern nur eines Antriebes mit NC-Steuerung bedarf. Diese Anordnung der Hauptschlitten mit ihren Greiferschlitten am Ausleger ermöglicht weiterhin einen gemeinsamen Antrieb für die senkrechten Bewegungen jedes Hauptschlittens und seines Greiferschlittens.
Die über den gemeinsamen Antrieb verbundenen Zahnriemenantriebe des Hauptschlittens und des Greiferschlittens ergeben einen zwangsläufig bestimmten Bewegungsablauf des Hauptschlittens und seines Greiferschlittens, ohne daß dafür zusätzliche Steuerungen erforderlich sind.
Die Verbindung der Zahnriemenantriebe von Hauptschlitten und Greiferschlitten führt zur Verdoppelung der Verfahrgeschwindigkeit des Greiferschlittens und somit zur Erhöhung der Arbeitsgeschwindigkeit.
Durch die voneinander unabhängigen Antriebe der Hauptschlitten können beide Hauptschlitten gleichzeitig in ihre obere Endstellung verfahren werden und schaffen dadurch Arbeitsfreiraum für die Schweißroboter.

In den Zeichnungen ist die Erfindung an einem Ausführungsbeispiel erläutert. Es zeigen
- Fig. 1: eine Gesamtansicht der Transporteinrichtung,
- Fig. 2: ein Schema der Zahnriemenantriebe eines Hauptschlittens und eines Greiferschlittens und
- Fig. 3: eine Masseausgleichsvorrichtung für einen Hauptschlittens mit Greiferschlitten.

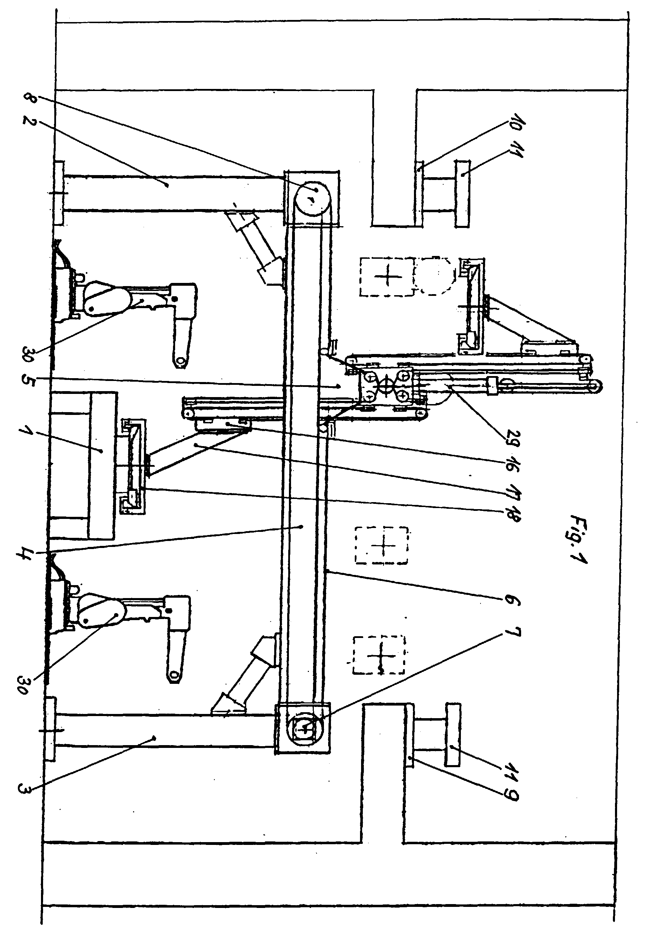

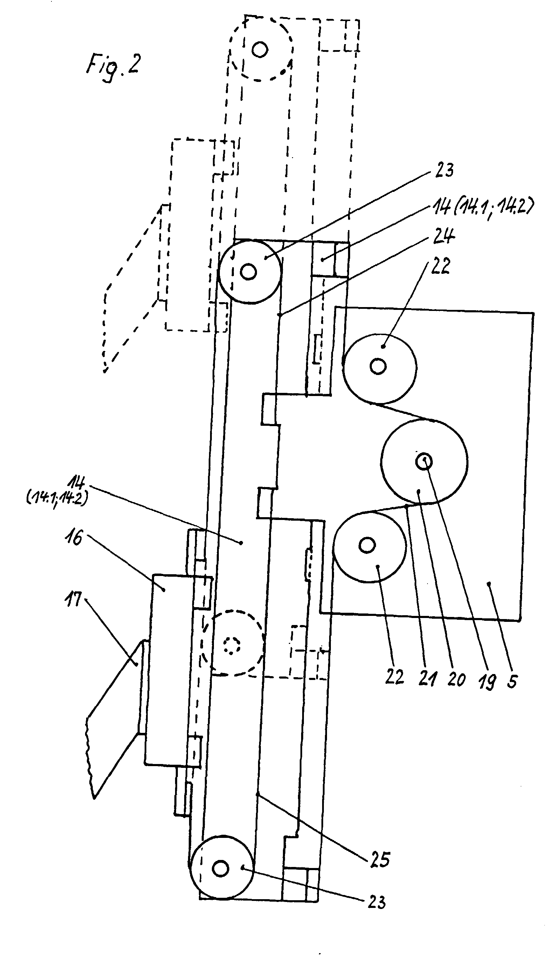

Am Werkhallenboden (Fig. 1) sind beidseitig einer Spannvorrichtung 1 je zwei Säulen 2;3 befestigt, an deren oberen Enden je ein waagerecht angeordneter Führungsträger 4 angebracht ist. Die beiden dadurch gebildeten Portale sind beidseitig der Spannvorrichtung 1 angeordnet. Auf den beiden Führungsträgern 4 ist ein Ausleger 5 längs der Führungsträger 4 verfahrbar gelagert. Als Antrieb dafür ist ein Zahnriemenantrieb 6 vorhanden, dessen NC-Antriebsmotor 7 mit Zahnriemenscheibe an einem Ende des Führungsträgers 4 befestigt ist. Am anderen Ende ist eine Umlenkscheibe 8 für den Zahnriemen 6 gelagert. Seitlich am Ausleger 5 sind die freien Enden des Zahnriemens 9;10 befestigt, der um die Zahnriemenscheibe des NC-Antriebsmotors 7 und die Umlenkscheibe 8 geschlungen ist. Es ist vorteilhaft, an jedem Führungsträger 4 einen Zahnriemenantrieb 6 vorzusehen und beide Antriebsmotoren 7 mit einer gemeinsamen NC-Steuerung zu versehen.
Oberhalb der Säulen 2;3 sind auf der Werkhaltendecke rechtwinklig zu den Führungsträgern 4 verlaufend zwei Überkopf-Transportbahnen 9;10 angeordnet. Die eine davon transportiert die zu bearbeitenden Bodenbaugruppen und die andere dient dem Abtransport der bearbeiteten Bodenbaugruppen. Beide Überkopf-Transportbahnen 9;10 sind taktweise im Rhythmus des Arbeitstaktes der Schweißvorrichtung angetrieben. Zur Aufnahme der Bodenbaugruppen können Transportwagen (Skid) 11 oder Hängevorrichtungen vorgesehen sein.

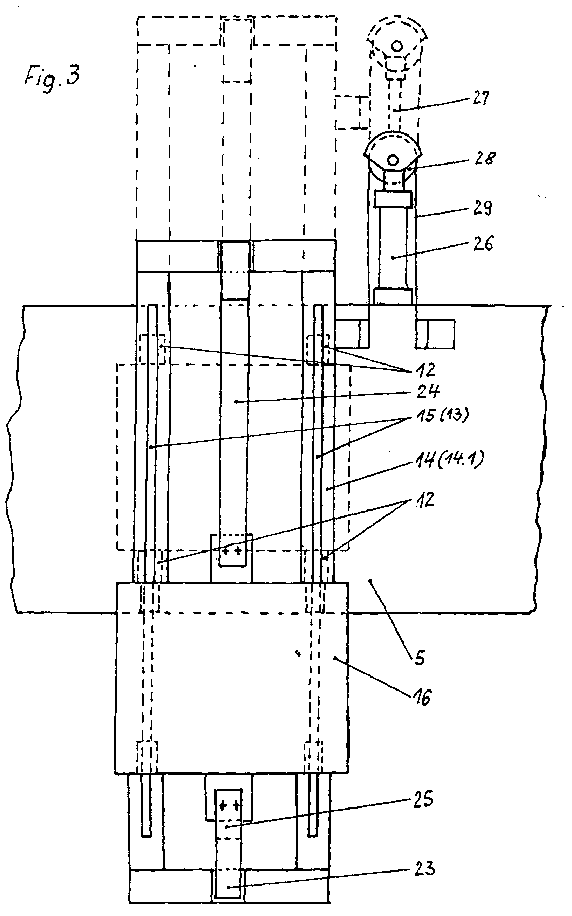

In der Mitte des Auslegers 5 sind an beiden Seiten je zwei Führungslager 12 zur Aufnahme von senkrechten Führungsleisten 13 (nicht sichtbar) befestigt (Fig. 3). Diese sind am Rahmen 14 eines senkrecht bewegbaren Hauptschlittens 14.1 befestigt und haben die gleiche Länge wie der Rahmen 14. Auf der gegenüberliegenden Seite des Rahmens 14 sind spiegelbildlich zwei weitere Führungsleisten 15 von gleicher Länge befestigt, auf denen senkrecht bewegbar ein Greiferschlitten 16 gelagert ist. An der den Führungsleisten 15 abgewandten Seite ist der Greiferschlitten 16 mit einem schräg nach unten gerichteten Arm 17 versehen, an dessen freiem Ende wechselbar pneumatisch betätigbare Greiferwerkzeuge 18 befestigt sind. Ein gleich ausgebildeter Hauptschlitten 14.2 mit Greiferschlitten 16 ist spiegelbildlich zum beschriebenen Hauptschlitten 14.1 auf der anderen Seite des Auslegers 5 angeordnet.
Zwischen den am Ausleger 5 befestigten Führungslagern 12 ist im Ausleger 5 je ein Antriebsmotor 19 für jeden Hauptschlitten 14.1;14.2 mit Greiferschlitten 16 befestigt (Fig.2). Er ist mit einer NC-Steuerung versehen und treibt eine Zahnriemenscheibe 20 an, auf der ein Zahnriemen 21 läuft. Dieser Zahnriemen 21 ist über zwei im Ausleger 5 befestigte Umlenkrollen 22 mit einem Ende zum oberen Ende des Rahmens 14 des einen Hauptschlittens 14.1 und mit dem anderen Ende zum unteren Ende des Rahmens 14 geführt und dort befestigt. Der andere Zahnriemen 20 ist über einen spiegelbildlich angeordneten Antriebsmotor 19 und Umlenkrollen 22 auf die gegenüberliegende Seite des Auslegers 5 geführt und dort in der vorbeschriebenen Weise mit dem Rahmen 14 des anderen Hauptschlittens 14.2 verbunden. Zum Antrieb der Greiferschlitten 16 sind an den oberen und unteren Enden der Hauptschlitten 14.1;14.2 frei drehbare Zahnriemenscheiben 23 gelagert. Über jede der Zahnriemenscheiben 23 ist ein offener Zahnriemen 24;25 geschlungen, dessen eines Ende am Ausleger 5 und dessen anderes Ende an der nach oben bzw. nach unten zeigenden Kante der Greiferschlitten 16 befestigt sind. Dabei ist die Länge der Zahnriemen 24;25 so gewählt, daß eine spielfreie Bewegung der Hauptschlitten 14.1;14.2 und der Greiferschlitten 16 entsteht. Um betriebsbedingte Längungen der Zahnriemen 6;20;24;25 ausgleichen zu können, ist jeweils an einem Zahnriemenende eine nicht gezeichnete Riemenspanneinrichtung angebracht.
Jeder Hauptschlitten 14.1;14.2 mit Greiferschlitten 16 wird hinsichtlich seines Eigengewichtes und des Gewichtes der Bodenbaugruppe durch einen am Ausleger 5 befestigten Pneumatikzylinder 26 ausgeglichen. Dazu ist am freien, nach oben zeigenden Ende seiner Kolbenstange 27 eine umlenkrolle 28 frei drehbar gelagert. Über die Umlenkrolle 28 ist ein biegsames Stahlband 29 geführt, dessen eines Ende am Rahmen 14 des Hauptschlittens 14.1 und dessen anderes Ende am Ausleger 5 befestigt sind. Der im Pneumatikzylinder 26 wirkende Druck wird durch einen nicht gezeichneten Druckspeicher erzeugt. Es liegt im Rahmen der Erfindung, eine gleichartige Masseausgleichvorrichtung zwischen Hauptschlitten 14.1;14.2 und Greiferschlitten 16 anzuordnen.

Die Arbeitsweise der Transporteinrichtung ist folgende:
Durch die eine Überkopf-Transportbahn 10 werden taktweise Unterbodenbaugruppen antransportiert. Zur Entnahme wird der zu dieser Überkopf-Transportbahn 10 zeigende Greiferschlitten 16 in seine höchste Stellung verfahren. Der Ausleger 5 wird in seine äußerste Stellung verfahren. In dieser Stellung befindet sich der in seiner höchsten Stellung befindliche Greiferschlitten 16 über einer Unterbodenbaugruppe, auf die er abgesenkt wird und die Greiferwerkzeuge 18 pneumatisch schließt. Durch kurze Hebebewegung des Greiferschlittens 16 wird die Unterbodenbaugruppe von dem Wagen (Skid) 11 der Überkopf-Transportbahn 10 abgehoben. Der Ausleger 5 wird nun auf eine Zwischenstellung verfahren. In dieser Stellung wird der andere Hauptschlitten 14.2 mit seinem Greiferschlitten 16 auf die auf der Spannvorrichtung 1 befindliche fertigbearbeitete Unterbodenbaugruppe abgesenkt. Seine Greifwerkzeuge 18 werden pneumatisch geschlossen. Der Hauptschlitten 14.2 und sein Greiferschlitten 16 heben die fertigbearbeitete Unterbodenbaugruppe von der Spannvorrichtung 1 ab und fahren in eine Höhe oberhalb der Schweißroboter 30. Der Ausleger 5 wird nun in eine weitere Zwischenstellung verfahren. Während dieser Fahrbewegung wird der Hauptschlitten 14.1 mit der unbearbeiteten Unterbodenbaugruppe über die Spannvorrichtung 1 gebracht und diese dort zur Bearbeitung abgelegt. Um die Bearbeitung durch Schweißroboter 30 zu ermöglichen, wird nun dieser Hauptschlitten 14.1 mit Greiferschlitten 16 in eine Höhe oberhalb der Schweißroboter 30 verfahren. Gleichzeitig wird der Hauptschlitten 14.2 und sein Greiferschlitten 16 mit der fertigbearbeiteten Bodenbaugruppe in seine höchste Stellung gebracht und anschließend der Ausleger 5 in seine äußere Endlage bewegt. Dort befindet sich die fertigbearbeitete Bodenbaugruppe über einem Wagen (Skid) 11 der Überkopf-Transportbahn 9 und wird durch pneumatisches öffnen der Greiferwerkzeuge 18 auf diesen abgelegt. Dieser Wagen (Skid) 11 wird taktweise durch einen leeren Wagen (Skid) 11 ersetzt. Zwischenzeitlich ist auch der andere Hauptschlitten 14.1 mit seinem Greiferschlitten 16 in seine höchste Stellung gebracht worden. In dieser Lage befindet sich an keinem der Greiferschlitten 16 eine Bodenbaugruppe. Nun wird der Ausleger 5 in seine gegensätzliche Endlage verfahren. Dort befindet sich dann über einer taktweise antransportierten unbearbeiteten Unterbodenbaugruppe der Greiferschlitten 16, der diese mit seinen Greiferwerkzeugen 18 erfaßt und, wie schon beschrieben, transportiert. Nach Ablage der unbearbeiteten Bodenbaugruppe auf der Spannvorrichtung 1 und Hochfahren des Hauptschlittens 14.1;14.2 mit Greiferschlitten 16 werden die anzufügenden Bauteile zur Spannvorrichtung 1 gebracht und dort mit der unbearbeiteten Bodenbaugruppe verschweißt.
Die Wirkungsweise der Antriebe der Hauptschlitten 14.1;14.2 und der Greiferschlitten 16 ist folgende:
Jeder Antriebsmotor 19 treibt über die Zahnriemenscheibe 20 den Zahnriemen 21 des Hauptschlittens 14.1 an. Durch Drehrichtungsänderung des Antriebsmotors 19 erfolgt die Richtungsänderung der Hauptschlittenbewegung. Befindet sich der Hauptschlitten 14.1 in seiner oberen Endlage, so ist der Zahnriemenantrieb 24;25 des Greiferschlittens 16 derart eingerichtet, daß der Greiferschlitten 16 auch in der oberen Endlage des Hauptschlittens 14.1 steht. Durch die Anbindung der Zahnriemen 24;25 des Greiferschlittens 16 an den Ausleger 5 und die Umlenkung über die Zahnriemenscheiben 23 an den Enden des Hauptschlittens 14.1 wird die Geschwindigkeit des Greiferschlittens 16 auf das Doppelte übersetzt. Dadurch werden kurze Hubzeiten erreicht.

Analog zu den Zahnriemenantrieben können als Antrieb für den Hauptschlitten 14.1;14.2 auch Zahnstangengetriebe oder Gewindespindel-/Muttergetriebe eingesetzt werden. Der Greiferschlittenantrieb ist in diesen Fällen aber ein Zahnriemenantrieb oder Bandantrieb der beschriebenen Art. Für Sonderausführungen können mit gewissen Einschränkungen auch hydraulische oder pneumatische Schubkolbengetriebe Anwendung finden.

### Aufstellung der Bezugszeichen

- 1: Spannvorrichtung
- 2: Säule
- 3: Säule
- 4: Führungsträger
- 5: Ausleger
- 6: Zahnriemenantrieb
- 7: NC-Antriebsmotor
- 8: Umlenkscheibe
- 9: Überkopf-Transportbahn
- 10: Überkopf-Transportbahn
- 11: Transportwagen (Skid)
- 12: Führungslager
- 13: Führungsleisten
- 14: Rahmen
- 14.1: Hauptschlitten
- 14.2: Hauptschlitten
- 15: Führungsleisten
- 16: Greiferschlitten
- 17: Arm
- 18: Greiferwerkzeuge
- 19: Antriebsmotor
- 20: Zahnriemenscheibe
- 21: Zahnriemen
- 22: Umlenkrollen
- 23: Zahnriemenscheibe
- 24: Zahnriemen
- 25: Zahnriemen
- 26: Pneumatikzylinder
- 27: Kolbenstange
- 28: Umlenkrolle
- 29: Stahlband
- 30: Schweißroboter

## Patentansprüche

1. Transporteinrichtung für Rohbauschweißvorrichtungen für Kraftfahrzeugkarosserie-Schweißbaugruppen, insbesondere Bodenbaugruppen, mit Überkopf-Transportbahnen für den An- und Abtransport der Schweißbaugruppen, gekennzeichnet durch folgende Merkmale:
- quer zu und zwischen den Überkopf-Transportbahnen (9;10) beidseitig einer Spannvorrichtung (1) für die Schweißbaugruppen angeordneten Führungsträgern (4) und einem darauf verfahrbar gelagerten Ausleger (5),
- beidseitig am Ausleger (5), zu den Transportbahnen (9;10) zeigend, senkrecht verfahrbar gelagerte Hauptschlitten (14.1;14.2) mit je zwei gegenüberliegenden Führungsbahnen (13;15),
- auf jeder in Richtung Transportbahnen (9;10) zeigenden Führungsbahn (15) der Hauptschlitten (14.1;14.2) senkrecht verfahrbar gelagerten Greiferschlitten (16),
- zwischen den Hauptschlitten (14.1;14.2) am Ausleger (5) befestigte Antriebsmotore (19) für jeweils einen Hauptschlitten (14.1;14.2) und dessen Greiferschlitten (16).

2. Schweißvorrichtung nach Anspruch 1,
dadurch gekennzeichnet,
daß die Fahrantriebe für den Ausleger (5), die Hauptschlitten (14.1;14.2) und die Greiferschlitten (16) NC-gesteuerte Achsen sind.

3. Schweißvorrichtung nach den Ansprüchen 1 und 2,
dadurch gekennzeichnet,
daß die Fahrantriebe als Zahnstangengetriebe oder als Gewindespindel-/Muttergetriebe oder als Zahnriemengetriebe oder als hydraulisches oder pneumatisches Schubkolbengetriebe ausgebildet sind, wobei der Fahrantrieb für den Greiferschlitten (16) in jedem Fall als vom Hauptschlittenantrieb abgeleiteter Zahnriemenantrieb oder Bandantrieb ausgebildet ist.

4. Zahnriemenantrieb als Fahrantrieb für die senkrechten Bewegungen der Hauptschlitten und der Greiferschlitten,
dadurch gekennzeichnet,
daß am Ausleger (5) ein Elektromotor (19) befestigt ist, der eine Zahnriemenscheibe (20) antreibt, um die ein offener Zahnriemen (21) geschlungen ist, dessen eines Ende am oberen Ende des Hauptschlittens (14.1;14.2) und dessen anderes Ende am unteren Ende des Hauptschlittens (14.1;14.2) befestigt ist und
daß an den beiden Enden des Hauptschlittens (14.1;14.2) Zahnriemenscheiben (23) frei drehbar gelagert sind, über die je ein offener Zahnriemen (24;25) geschlungen ist, dessen eines Ende am Ausleger (5) und dessen anderes Ende am Greiferschlitten (16) befestigt ist.

5. Zahnriemenantrieb nach Anspruch 4,
dadurch gekennzeichnet,
daß jeder Zahnriemen (6;20;24;25) in Längsrichtung spannbar ist.

6. Zahnriemenantrieb nach den Ansprüchen 4 und 5,
dadurch gekennzeichnet,
daß am Ausleger (5) für jeden Hauptschlitten (14.1;14.2) mit Greiferschlitten (16) eine hydraulisch oder pneumatisch angetriebene Masseausgleichvorrichtung (26) so angeordnet ist, daß ihr Lastaufnahmeglied (28) über ein Zugorgan (29) mit dem Hauptschlitten (14.1;14.2) und dem Ausleger (5) verbunden ist.
